# EUROPÄISCHE PATENTSCHRIFT

(11) **EP 1 193 302 B1**
(45) Veröffentlichungstag und Bekanntmachung des Hinweises auf die Patenterteilung: **23.11.2005**
(21) Anmeldenummer: 01119008.9
(22) Anmeldetag: 07.08.2001
(51) Int. Cl.: C09D 183/08, C04B 41/49

(54) **Farbe, Lack, Schadstoffe, Bioorganismen, Öl, Wasser und/oder Schmutz abweisende Beschichtung**
Paint, laquer, contaminants, bioorganisms, oil, water and/or soil repellent coating
Revêtement résistant à la contamination par les peintures, les matières nuisibles, les huiles, l'eau et/ou salissure

(30) Priorität: 27.09.2000 DE 10049153
(43) Veröffentlichungstag der Anmeldung: 03.04.2002
(73) Patentinhaber: Degussa AG, 40474 Düsseldorf (DE)
(72) Erfinder: Standke, Burkhard, Dr., 79540 Lörrach (DE); Bartkowiak, Bernd, 79664 Wehr (DE)

(56) Entgegenhaltungen:
- EP-A- 0 101 816
- EP-A- 0 846 717

## Beschreibung

Die vorliegende Erfindung betrifft eine Farbe, Lack, Schadstoffe, Bioorganismen, Öl, Wasser und/oder Schmutz abweisende Beschichtung auf saugfähigen, anorganischen Substraten sowie ein Verfahren zur Erzeugung einer solchen Beschichtung einschließlich entsprechend beschichteter Substrate.

Es ist lange bekannt, Alkylalkoxysilane sowie Fluoralkylalkoxysilane oder entsprechende Polykondensate herzustellen und im Wesentlichen als Hydrophobierungs- sowie Oleophobierungsmittel zu verwenden (DE-OS 15 18 531, EP 0 101 816 B1, EP 0 587 667 B1, EP 0 716 127 A2, EP 0 716 128 A2 und DE-OS 195 44 763).

Um hinreichend stabile Lösungen bzw. Zubereitungen alkyl- bzw. fluoralkylfunktioneller Silane sowie entsprechender Cokondensate zu erhalten, hat man organische Lösemittel oder auch Emulgatoren eingesetzt (DE-PS 27 51 714, EP 0 538 555 B1, EP 0 819 665 A1, WO 95/23830, EP 0 846 716 A1, EP 0 960 921 A1).

Stickstoffhaltige bzw. aminoalkyl- und fluoralkylfunktionelle und im Wesentlichen Alkoxygruppen freie Organosiloxane sind als wasserlösliche Bestandteile in ansonsten Emulgator bzw. Tensid freien Mitteln zur Erzeugung von Wasser, Öl und Schmutz abweisenden Oberflächen bekannt (EP 0 846 717 A1).

Die deutsche Patentanmeldung 199 55 047.6 offenbart eine Zusammensetzung, die mindestens ein triaminoalkyl- und fluoralkylfunktionelles, hydroxygruppen- und/oder alkoxygruppenhaltiges Organosiloxan oder ein entsprechendes Organosiloxangemisch, Wasser, gegebenenfalls einen Gehalt an Alkohol und gegebenenfalls einen Gehalt an Säure enthält, wobei das Mittel insbesondere für zur Hydrophobierung und/oder Oleophobierung von Oberflächen, für "Anti-Graffiti"-Anwendungen, d. h. mit Farbe und Lack abweisender Wirkung, sowie für "Easy to clean"-Anwendungen, d. h. mit Schmutz oder Bioorganismen abweisender Wirkung, eingesetzt werden kann.

Farbschmierereien auf Gebäuden stellen besonders in größeren Städten weltweit ein immer größer werdendes Problem dar. Die Reinigung betroffener Gebäudefassaden ist sehr aufwendig und mit hohen Kosten verbunden. Daher werden auf gefährdete Fassadenbereiche so genannte Antigraffitischutzschichten aufgebracht.

Aus DE 199 55 047.6 geht hervor, dass Wasser-basierende Cokondensate aus triaminofunktionellen Trialkoxysilanen und Fluoralkylsilanen besonders geeignet für den Graffitischutz sind. Gleichzeitig sind diese Produkte aber sehr teuer, weil zu ihrer Herstellung hochpreisige Edukte verwendet werden. Saugfähige, d. h. poröse mineralische Baustoffe, wie Beton, können bei der Imprägnierung mit den aus DE 199 55 047.6 beschriebenen Substanzen den Einsatz größerer Mengen erforderlich machen, was sich in manchen Fällen hauptsächlich aus Kostengründen als prohibitiv für den Einsatz erweist.

Beton und andere mineralische Baustoffe sind nicht nur durch Graffitischmierereien gefährdet, sondern auch durch eindringendes Wasser, welches Schadstoffe, wie beispielsweise Chloride, in das poröse Gefüge transportieren und zum Beispiel die Stahlarmierung von Beton schädigen können. Ein Schutz vor eindringenden Chloriden bieten die erwähnten fluorfunktionellen Cokondensate aus DE 199 55 047.6 aufgrund ihrer sehr geringen Eindringtiefe in den porösen Baustoff kaum.

Es besteht daher Bedarf an Antigraffitibeschichtungen, die einen möglichst geringen Materialverbrauch an hochpreisigen Produkten erforderlich machen und auch einen verbesserten Schutz vor wassertransportierten Schadstoffen bietet.

Der Erfindung lag die Aufgabe zugrunde, eine weitere Möglichkeit bereitzustellen, anorganische Substrate zu schützen und insbesondere mit Antigraffitieigenschaften auszustatten.

Die gestellte Aufgabe wurde erfindungsgemäß entsprechend den Angaben der Patentansprüche gelöst.

Überraschenderweise wurde gefunden, dass Antigraffitibeschichtungen mit verringertem Materialverbrauch hergestellt werden können, indem zunächst eine stark verdünnte Lösung der in DE 199 55 047.6 beschriebenen Produkte appliziert wird, sodass ein Wasser abweisender Effekt an der Oberfläche entsteht und im Anschluss eine oder weitere Schichten der in DE 199 55 047.6 beschriebenen Produkte in geeigneter Weise aufgetragen werden. Ebenso überraschend wurde gefunden, dass die Wassereindringung und damit auch das Eindringen wassergelöster Schadstoffe in mineralische Untergründe zusammen mit hervorragender Antigraffitiwirkung erreicht werden kann, indem man vor der oder den Beschichtungen mit den in DE 199 55 047.6 beschriebenen Produkten eine Behandlung mit mindestens einem alkylfunktionellen Alkyltrialkoxysilan durchführt.

Nach dem erfindungsgemäßen Verfahren kann man in vorteilhafter Weise eine permanente Antigraffitibeschichtung mit hervorragenden Farbe, Lack, Schadstoffe, Bioorganismen, Öl, Wasser sowie Schmutz abweisenden Eigenschaften erzeugen.

Gegenstand der vorliegenden Erfindung ist daher ein Verfahren zur Erzeugung einer Farbe, Lack, Schadstoffe, Bioorganismen, Öl, Wasser und/oder Schmutz abweisenden Schicht auf einem anorganischen Substrat, das dadurch gekennzeichnet ist, dass man in einem ersten Schritt
(i) ein Organosiloxan, das mindestens eine Triaminogruppe der allgemeinen Formel I

   [NHₓ(CH₂)ₐNH_{y}(CH₂)_{b}NH_{z}]- (I),

   wobei eine solche über mindestens eine N-gebundene Alkylengruppe mit 1 bis 4 C-Atomen an mindestens ein Siliciumatom gebunden ist, a und b gleich oder verschieden sind und eine ganze Zahl von 1 bis 6 darstellen, x gleich 0 oder 1 oder 2 ist, y gleich 0 oder 1 ist, z gleich 0 oder 1 oder 2 ist und der Maßgabe (x+y+z) ≤ 4,
   mindestens eine Si-C-gebundene Fluoralkylgruppe der allgemeinen Formel II

   F₃C(CF₂)ᵣ(CH₂)ₛ- (II),

   worin r eine ganze Zahl von 0 bis 18 darstellt und s gleich 0 oder 2 ist,
   und mindestens eine Hydroxy- und/oder Alkoxygruppe trägt,
   oder
(ii) eine Zubereitung, die ein Organosiloxan oder ein Gemisch von Organosiloxanen gemäß (i) enthält,
   oder
(iii) ein Alkylalkoxysilan, wobei Alkyl für eine lineare, verzweigte oder cyclische Alkylreste mit 1 bis 16 C-Atomen und Alkoxy für Methoxy oder Ethoxy oder Propoxy oder Butoxy stehen,
   oder
(iv) eine Zubereitung, die mindestens ein Organosiloxan enthält, das mindestens eine Aminogruppe der allgemeinen Formel III

   [NH₂(CH₂)ₐ(NH)ᵣ(CH₂)_{b}(NH)ₛ]- (III),

   wobei diese über mindestens eine N-gebundene Alkylengruppe mit 1 bis 4 C-Atomen an mindestens ein Siliciumatom gebunden ist, a und b gleich oder verschieden sind und eine ganze Zahl von 0 bis 6 darstellen, r gleich 0 oder 1 ist, s gleich 0 oder 1 ist und der Maßgabe, wenn a = 0 ist r = 0 und wenn b = 0 ist s = 0,
   mindestens eine Si-C-gebundene lineare, verzweigte oder cyclische Alkylgruppe mit 1 bis 16 C-Atomen
   und mindestens eine Hydroxy- und/oder Alkoxygruppe trägt,
   auf dem Substrat appliziert,
   danach in einem zweiten Schritt eine weitere Schicht unter Einsatz eines Organosiloxans gemäß (i) oder einer Organosiloxan enthaltenden Zusammensetzung gemäß (ii) auf das behandelte Substrat aufbringt
   und den zweiten Schritt gegebenenfalls noch einmal oder weitere Male wiederholt.

Im Allgemeinen verwendet man beim erfindungsgemäßen Verfahren die Komponenten (i) bis (iv) in einem Imprägniermittel mit einer Wirkstoffkonzentration von 0,01 bis 100 Gew.-%, vorzugsweise von 0,01 bis 95 Gew.-%, besonders vorzugsweise von 0,5 bis 80 Gew.-%, ganz besonders vorzugsweise von 1 bis 60 Gew.-%.

Dabei kann man die Komponenten (i) bis (iv) in einer wässrigen und/oder alkoholischen Zubereitung oder in einer Emulsion verwenden. Hierbei können sowohl flüssige bzw. niedrigviskose als auch cremeförmige bzw. hochviskose Emulsionen zum Einsatz kommen.

Geeigneterweise setzt man im ersten Schritt des erfindungsgemäßen Verfahrens die Komponenten (i) bis (iv) in verdünnter Form in Zusammensetzungen mit einer Wirkstoffkonzentration von 0,1 bis 40 Gew.-% ein, besonders bevorzugt sind 0,5 bis 10 Gew.-%, ganz besonders bevorzugt sind 1 bis 5 Gew.-%.

In einem zweiten oder weiteren Schritt des erfindungsgemäßen Verfahrens setzt man die Komponenten (i) oder (ii) oder ein entsprechendes Mittel vorteilhaft mit einer Wirkstoffkonzentration von 1 bis 50 Gew.-%, vorzugsweise von 5 bis 20 Gew.-%, ein.

Als bevorzugte Komponente (iii) kann man Methyltrimethoxysilan, Dimethyldimethoxysilan, Methyltriethoxysilan, Dimethyldiethoxysilan, i-Propyltrimethoxysilan, i-Propyltriethoxysilan, n-Propyltrimethoxysilan, n-Propyltriethoxysilan, i-Butyltrimethoxysilan, i-Butyltriethoxysilan, n-Butyltrimethoxysilan, n-Butyltriethoxysilan, i-Octyltrimethoxysilan, i-Octyltriethoxysilan, n-Octyltrimethoxysilan, n-Octyltriethoxysilan, Hexadecyltrimethoxysilan oder Hexadecyltriethoxysilan einsetzen.

Weiterhin sind als Komponenten gemäß (i) oder (ii) ein Organosiloxan und/oder ein Gemisch von Organosiloxanen bevorzugt, welche durch Cokondensation von einem Aminoethylaminoethylaminopropyltrialkoxysilan und Tridecafluoroctyltrialkoxysilan erhalten wurden, wobei Alkoxy für Methoxy sowie für Ethoxy steht, vgl. DE 199 55 047.6.

Insbesondere ist ein Organosiloxan und/oder ein Gemisch von Organosiloxanen beim vorliegenden Verfahren bevorzugt, worin das molare Verhältnis der Gruppen gemäß den Formeln I und II 1 : s 3,5 beträgt.

Beim erfindungsgemäßen Verfahren kann man die Komponenten (i) bis (iv) gemäß Schritt eins, zwei oder weiteren Schritten durch Aufsprühen, Aufstreichen, Aufrollen, Tauchen, Rakeln, Polieren oder Fluten auf das Substrat aufbringen.

Vorzugsweise sprüht man im zweiten oder in weiteren Schritten das Imprägniermittel auf, wobei die Sprühtröpfchen geeigneterweise so klein eingestellt werden, dass sie nicht von der hydrophobierten Oberfläche abrollen, auch wenn das Substrat senkrecht steht, und die aufgebrachten Sprühtropfen gleichmäßig verteilt werden, sodass ein homogener Flüssigkeitsfilm auf der Oberfläche entsteht. Das Verteilen des im zweiten oder weiteren Schritt aufgebrachten Imprägniermittels kann mechanisch vorgenommen werden, beispielsweise mittels Bürste, Pinsel oder ähnlicher praxisüblicher Gerätschaften.

Insbesondere behandelt man zur Farbe, Lack, Schadstoffe, Bioorganismen, Öl, Wasser und/oder Schmutz abweisenden Ausstattung einen porösen, mineralischen Baustoff nach dem erfindungsgemäßen Verfahren.

Geeigneterweise handelt es sich bei dem porösen, mineralischen Baustoff, d. h. dem Substrat, um Beton, Kalksandstein, Ziegel, mineralischen Putz oder Naturstein, wie beispielsweise Sandstein, Marmor, Travertin oder Granit.

Weiterhin kann es sich bei dem Substrat um einen mit einem Farbsystem beschichteten porösen, mineralischen Baustoff handeln.

Im Allgemeinen führt man das erfindungsgemäße Verfahren derart aus, dass man im ersten Schritt kostengünstig eine Imprägnierung mit einem alkyl- und/oder fluoralkylfunktionelle Siliciumverbindungen enthaltenden Mittel durchführt. Dabei bringt man ein Mittel auf das Substrat auf, das geeigneterweise auch tiefer in das poröse Substrat eindringt, gegebenenfalls mit dem Substrat reagiert, d. h. anbindet. In der Regel lässt man die erste Beschichtung bei Umgebungstemperatur trocknen.

Bevorzugt wird danach die hochpreisige Komponente (i) bzw. (ii) in einem zweiten Behandlungsschritt aufgesprüht. Das auf die Oberfläche aufgesprühte Mittel kann zusätzlich mechanisch verteilt werden. Geeigneterweise lässt man auch beim zweiten Schritt die Beschichtung trocknen.

Den so durchgeführten zweiten Behandlungsschritt kann man auch ein drittes Mal oder weitere Male durchführen. So erhält man in vorteilhafter Weise eine erfindungsgemäße Beschichtung auf einem porösen, anorganischen Substrat.

Gegenstand der vorliegenden Erfindung ist daher auch eine Beschichtung, die nach dem vorliegenden erfindungsgemäßen Verfahren erhältlich ist.
Ferner ist Gegenstand der vorliegenden Erfindung die Verwendung einer erfindungsgemäßen Beschichtung zur Farbe, Lack, Schadstoffe, Bioorganismen, Öl, Wasser und/oder Schmutz abweisenden Ausstattung eines saugfähigen, anorganischen Substrats.

Ebenfalls ist Gegenstand der vorliegenden Erfindung ein erfindungsgemäß beschichtetes Substrat.

Die erfindungsgemäßen Beschichtungen werden im Folgenden detailliert beschrieben ohne den Gegenstand zu begrenzen. Poröse Substrate, z. B. Betonwerkstein oder Pflastersteine nach DIN 18 501, weisen eine hohe Porosität und damit auch eine hohe Wasseraufnahme auf. Gerechnet auf den Quadratmeter können im Allgemeinen bis zu 800 g Wasser aufgenommen werden. Ebenso viel Imprägnierflüssigkeit aus Beispiel 1 der DE 199 55 047.6 würde aufgenommen werden, was einen kommerziellen Einsatz dieser recht kostenintensiven Produkte verhindern kann. Deutlich geringere Materialverbräuche kann man erhalten, wenn beispielsweise eine Vorimprägnierung mit einer stark verdünnten Imprägnierlösung, geeigneterweise gemäß Beispiel 1 der DE 199 55 047.6, vorgenommen wird. Nach dem Trocknen erweist sich die Oberfläche als stark hydrophob aber noch nicht ausreichend bezüglich einer Antigraffitiwirkung. Bei einer nachfolgenden zweiten bzw. weiteren Imprägnierung mit einem unverdünnten oder weniger verdünnten Produkt, beispielsweise aus Beispiel 1 der DE 199 55 047.6, wird in der Regel viel weniger Produkt benötigt. Die zweite Imprägnierung kann durch Einbürsten des Produkts auf die hydrophobe mineralische Oberfläche oder besonders vorteilhaft durch Einsprühen der Oberfläche mit einer so geringen Sprühtröpfchengröße erfolgen, dass ein Abfließen von der Oberfläche verhindert wird. Es ist überraschend, dass insbesondere sehr kleine Sprühtröpfchen auf der stark hydrophoben Oberfläche haften. Die Summe des Verbrauchs an Produkt ist im Allgemeinen deutlich geringer als bei einfacher Imprägnierung der porösen mineralischen Oberfläche mit einem Konzentrat. Die zuvor beschriebene Beschichtung kann beliebig oft wiederholt werden, bis der gewünschte Antigraffitieffekt erreicht wird. Eine Vorimprägnierung gemäß erstem Schritt mit Alkyltrialkoxysilanen kann in vergleichbarer Weise erfolgen. Hierdurch wird insbesondere auf Beton aber auch bei anderen mineralischen Substraten, wie beispielsweise Ziegel, Kalksandstein oder diverse Natursteine, der zusätzliche Vorteil erreicht, dass eine deutliche Reduktion der Wasseraufnahme erfolgt, was sich naturgegeben positiv auf das Eindringen wasserlöslicher Schadstoffe auswirkt. Nach einer Imprägnierung mit einem Alkyltrialkoxysilan führt man geeigneterweise die Beschichtungen mit einem in DE 199 55 047.6 beschriebenen Produkt in der oben beschriebenen Weise durch. Man kann aber auch andere fluoralkylfunktionelle Siliciumverbindungen verwenden.

Die vorliegende Erfindung wird durch die folgenden Beispiele näher erläutert:

### Beispiele

Unter VPS 8815 wird im Folgenden das Produkt aus Beispiel 1 der DE 199 55 047.6 verstanden. Es handelt sich dabei um ein Cokondensat aus Aminoethylaminoethylaminopropyltrimethoxysilan und Tridecafluoroctyltriethoxysilan in einem molaren Verhältnis von 1 : 3, neutralisiert mit 3 mol Ameisensäure pro mol eingesetztem Aminosilan, gelöst in Wasser, der Hydrolysealkohol wurde destillativ vollständig entfernt, und einer Wirkstoffkonzentration von 15 Gew.-%, bezogen auf das eingesetzte Fluoralkyltriethoxysilan.

### Vergleichsbeispiel A

### Imprägnierung von Betonwerkstein mit VPS 8815 und Beurteilung der Antigraffitieigenschaften

Ein trockener Betonpflasterstein (gemäß DIN 18 501, getrocknet 1 Tag bei 60 °C im Umlufttrockenschrank, danach 1 Tag Lagerung bei Raumtemperatur im Labor) wird mit VPS 8815 behandelt. Hierzu wird mit einem Pinsel so lange VPS 8815 auf die Steinoberfläche aufgebracht, bis der Stein keine weitere Imprägnierflüssigkeit aufnimmt. Der Imprägniermittelverbrauch wird durch Differenzwägung bestimmt (Imprägniermittelverbrauch = Gewicht des Steins direkt nach Imprägnierung - Gewicht des Steins vor Imprägnierung). Der Imprägniermittelverbrauch beträgt ca. 600 g/m². Anschließend wird der Stein 2 Wochen bei Raumtemperatur im Labor gelagert. Die Antigraffitieigenschaften werden im Anschluss bestimmt. Hierzu wird mit einem schwarzen Filzstift (Edding 800 Permanent Marker) ein Strich quer über den Stein gezogen. Nach einem weiteren Tag Lagerzeit wird der schwarze Strich auf der Steinoberfläche mit einem in Ethanol getränkten, saugfähigen Tuch versucht abzuwischen. Dies gelingt gut, da das Lösemittel Ethanol wegen der Imprägnierschicht nur in sehr geringem Umfang aufgesogen wird. Es bleibt nur ein geringfügiger Schatten zurück.

Bei entsprechenden unbehandelten Steinen oder Steinen, die mit Imprägnierflüssigkeiten auf Basis von Alkylalkoxysilanen (z. B. Isobutyltriethoxysilan) imprägniert wurden, ist nahezu keinerlei Reinigungserfolg erzielbar. Im Gegenteil, der schwarze Strich verschmiert und die beschmutzte Fläche wird damit größer. Auch durch Anwendung großer Mengen Lösemittel ist keine Reinigung zu erzielen. Die feinen Farbpartikel werden mit dem Ethanol in das saugfähige, poröse Substrat eingetragen und sind damit nicht mehr entfernbar.

### Vergleichsbeispiel B

### Imprägnierung von Betonwerkstein mit verdünntem VPS 8815 und Beurteilung der Antigraffitieigenschaften

Ein trockener Betonpflasterstein (gemäß DIN 18 501, getrocknet 1 Tag bei 60 °C im Umlufttrockenschrank, danach 1 Tag Lagerung bei Raumtemperatur im Labor) wird mit verdünntem VPS 8815 behandelt (1 Teil VPS 8815 gemischt mit 14 Teilen Wasser). Hierzu wird mit einem Pinsel so lange das verdünnte VPS 8815 auf die Steinoberfläche aufgebracht, bis der Stein keine weitere Imprägnierflüssigkeit aufnimmt. Der Imprägniermittelverbrauch wird durch Differenzwägung bestimmt (Imprägniermittelverbrauch = Gewicht des Steins direkt nach Imprägnierung - Gewicht des Steins vor Imprägnierung). Der Imprägniermittelverbrauch beträgt auch diesmal ca. 600 g/m². Anschließend wird der Stein 2 Wochen bei Raumtemperatur im Labor gelagert. Die Antigraffitieigenschaften werden im Anschluss bestimmt. Hierzu wird mit einem schwarzen Filzstift (Edding 800 Permanent Marker) ein Strich quer über den Stein gezogen. Nach einem weiteren Tag Lagerzeit wird der schwarze Strich auf der Steinoberfläche mit einem in Ethanol getränkten, saugfähigen Tuch versucht abzuwischen. Dies gelingt nur in geringem Umfang, da das Lösemittel Ethanol wegen der nicht ausreichenden Imprägnierschicht in beträchtlichem Umfang aufgesogen wird. Es bleibt ein deutlich sichtbarer Schatten zurück. Der Reinigungserfolg ist nach visueller Beurteilung deutlich schlechter als der Reinigungseffekt, der bei dem Stein erzielt wurde, welcher mit der konzentrierten Lösung behandelt wurde. Jedoch ist der Reinigungserfolg deutlich besser als bei unbehandelten oder mit Alkyltrialkoxysilan behandelten Steinen.

### Beispiel 1

### Zweifachimprägnierung von Betonwerkstein

Ein trockener Betonpflasterstein (gemäß DIN 18 501, getrocknet 1 Tag bei 60 °C im Umlufttrockenschrank, danach 1 Tag Lagerung bei Raumtemperatur im Labor) wird mit verdünntem VPS 8815 behandelt (1 Teil VPS 8815 gemischt mit 14 Teilen Wasser). Hierzu wird mit einem Pinsel so lange das verdünnte VPS 8815 auf die Steinoberfläche aufgebracht, bis der Stein keine weitere Imprägnierflüssigkeit aufnimmt. Der Imprägniermittelverbrauch wird durch Differenzwägung bestimmt (Imprägniermittelverbrauch = Gewicht des Steins direkt nach Imprägnierung - Gewicht des Steins vor Imprägnierung). Der Imprägniermittelverbrauch beträgt ca. 600 g/m². Anschließend wird der Stein ca. 2 Stunden bei Raumtemperatur im Labor getrocknet. Danach erfolgt der zweite Schichtauftrag. Hierzu wird mit einer handelsüblichen Sprühapparatur (Gloria Feinsprüher 1 Liter, Betriebsüberdruck 3 bar, Düseneinstellung Feinsprühstrahl) ein feiner Sprühnebel von VPS 8815 (unverdünnt eingesetzt) auf der hydrophoben Steinoberfläche abgeschieden. Die Tröpfchengröße wird so gering eingestellt, dass die abgeschiedenen Tröpfchen nicht abrollen (auch dann nicht, wenn der Stein senkrecht aufgestellt wird). Anschließend werden die feinen Tröpfchen mit einer weichen Bürste auf der Oberfläche des Steins zu einem homogenen Film verrieben. Die vom Stein bei diesem Prozess aufgenommene Imprägniermittelmenge beträgt nur ca. 100 g/m². Nach 2 Wochen Lagerung des Steins bei Raumtemperatur werden die Antigraffitieigenschaften bestimmt. Hierzu wird mit einem schwarzen Filzstift (Edding 800 Permanent Marker) ein Strich quer über den Stein gezogen. Nach einem weiteren Tag Lagerzeit wird der schwarze Strich auf der Steinoberfläche mit einem in Ethanol getränkten, saugfähigen Tuch versucht abzuwischen. Dies gelingt vollständig, da das Lösemittel Ethanol nicht aufgesogen wird. Es bleiben keine visuell erkennbaren Schatten zurück. Der Reinigungserfolg ist nach visueller Beurteilung sehr gut und deutlich besser als der Reinigungseffekt, der bei dem Stein erzielt wurde, welcher mit der konzentrierten Lösung allein behandelt wurde. Der Imprägniermittelverbrauch beträgt insgesamt, bezogen auf das unverdünnt eingesetzte VPS 8815, ca. 140 g/m² und liegt damit bei verbesserter Antigraffitiwirkung deutlich unterhalb des Imprägniermittelverbrauchs im Vergleichsbeispiel A.

### Beispiel 2.1

### Imprägnierung von Kalksandstein mit Isobutyltriethoxysilan, Bestimmung der Wasseraufnahme

Ein Kalksandsteinprobekörper (Würfel mit ca. 5 cm Kantenlänge, Prüfkörpervorbehandlung wie in den Vergleichsbeispielen A bzw. B beschrieben) wird zweimal 5 Sekunden in Isobutyltriethoxysilan getaucht in einer Weise, dass der Flüssigkeitsspiegel ca. 5 cm oberhalb der Oberkante des Prüfkörpers liegt. Dieser Prozess simuliert die Aufbringung eines Hydrophobiermittels per Airless-Sprühverfahren, eine Applikationsmethode, die sich in der Praxis etabliert hat. Nach Lagerung des Prüfkörpers im Labor (2 Wochen, Raumtemperatur) wird die Wasseraufnahme des Prüfkörpers im Vergleich zu einem gleich gelagerten und dimensionierten aber nicht mit Isobutyltriethoxysilan behandelten Prüfkörper bestimmt. Hierzu wird zunächst das Gewicht des Prüfkörpers bestimmt. Anschließend wird der Prüfkörper 24 Stunden unter Wasser gelagert (Flüssigkeitsspiegel 5 cm oberhalb der Prüfkörperoberkante). Danach erfolgt wiederum Gewichtsbestimmung. Festgehalten wird die Gewichtsänderung in Prozent. Die Wasseraufnahme des unbehandelten Prüfkörpers beträgt 10,1 %. Die Wasseraufnahme des mit Isobutyltriethoxysilan behandelten Prüfkörpers beträgt 0,82 %. Die Reduktion der Wasseraufnahme beträgt damit mehr als 90 %. Eine Reduktion der Wasseraufnahme > 80 % ist erfahrungsgemäß erforderlich, um einen sicheren Schutz vor eindringendem Wasser zu bieten. Der imprägnierte Stein weist keine Antigraffitieigenschaften auf.

### Beispiel 2.2

### Imprägnierung von Kalksandstein mit VPS 8815, Bestimmung der Wasseraufnahme

Ein Kalksandsteinprobekörper (Würfel mit ca. 5 cm Kantenlänge, Prüfkörpervorbehandlung wie in den Beispielen 1 bis 3 beschrieben) wird zweimal 5 Sekunden in VPS 8815 (unverdünnte Lösung) getaucht in einer Weise, dass der Flüssigkeitsspiegel ca. 5 cm oberhalb der Oberkante des Prüfkörpers liegt. Dieser Prozess simuliert die Aufbringung eines Hydrophobiermittels per Airless-Sprühverfahren, eine Applikationsmethode, die sich in der Praxis etabliert hat. Nach Lagerung des Prüfkörpers im Labor (2 Wochen, Raumtemperatur) wird die Wasseraufnahme des Prüfkörpers im Vergleich zu einem gleich gelagerten und dimensionierten aber nicht mit Isobutyltriethoxysilan behandelten Prüfkörper bestimmt. Hierzu wird zunächst das Gewicht des Prüfkörpers bestimmt. Anschließend wird der Prüfkörper 24 Stunden unter Wasser gelagert (Flüssigkeitsspiegel 5 cm oberhalb der Prüfkörperoberkante). Danach erfolgt wiederum Gewichtsbestimmung. Festgehalten wird die Gewichtsänderung in Prozent. Die Wasseraufnahme des unbehandelten Prüfkörpers beträgt 10.1 %. Die Wasseraufnahme des mit VPS 8815 behandelten Prüfkörpers beträgt 5,0 %. Die Reduktion der Wasseraufnahme beträgt damit ca. 50 %. Eine Reduktion der Wasseraufnahme > 80 % ist erfahrungsgemäß erforderlich, um einen sicheren Schutz vor eindringendem Wasser zu bieten. Die Imprägnierung mit VPS 8815 bietet damit keinen wirksamen Schutz vor Wassereindringung. Die Antigraffitieigenschaften entsprechen denjenigen aus Beispiel 1.

### Beispiel 2.3

### Imprägnierung von Kalksandstein mit Isobutyltriethoxysilan und VPS 8815, Bestimmung der Wasseraufnahme

Ein Kalksandsteinprobekörper (Würfel mit ca. 5 cm Kantenlänge, Prüfkörpervorbehandlung wie in den Vergleichsbeispielen A bzw. B beschrieben) wird zweimal 5 Sekunden in Isobutyltriethoxysilan getaucht in einer Weise, dass der Flüssigkeitsspiegel ca. 5 cm oberhalb der Oberkante des Prüfkörpers liegt. Dieser Prozess simuliert die Aufbringung eines Hydrophobiermittels per Airless-Sprühverfahren, eine Applikationsmethode, die sich in der Praxis etabliert hat. Nach Trocknung des Prüfkörpers im Labor (2 Stunden, Raumtemperatur) wird der Tauchvorgang wiederholt, nur wird diesmal anstelle von Isobutyltriethoxysilan unverdünntes VPS 8815 verwendet. Anschließend wird der Prüfkörper 2 Wochen im Labor bei Raumtemperatur gelagert. Danach wird die Wasseraufnahme des Prüfkörpers im Vergleich zu einem gleich gelagerten und dimensionierten aber nicht behandelten Prüfkörper bestimmt. Hierzu wird zunächst das Gewicht des Prüfkörpers bestimmt. Anschließend wird der Prüfkörper 24 Stunden unter Wasser gelagert (Flüssigkeitsspiegel 5 cm oberhalb der Prüfkörperoberkante). Danach erfolgt wiederum Gewichtsbestimmung. Festgehalten wird die Gewichtsänderung in Prozent. Die Wasseraufnahme des unbehandelten Prüfkörpers beträgt 10,1 %. Die Wasseraufnahme des mit Isobutyltriethoxysilan und VPS 8815 behandelten Prüfkörpers beträgt 0,7 %. Die Reduktion der Wasseraufnahme beträgt damit deutlich mehr als 90 %. Eine Reduktion der Wasseraufnahme > 80 % ist erfahrungsgemäß erforderlich, um einen sicheren Schutz vor eindringendem Wasser zu bieten. Die Antigraffitieigenschaften entsprechen denjenigen aus Beispiel 1.

### Vergleichsbeispiel C

### Imprägnierung von rotem Mainsandstein mit VPS 8815, Beurteilung der Antigraffitieigenschaften

Roter Mainsandstein wird in Platten der Dimensionierung 30 x 30 x 2 cm zugeschnitten, mit Wasser gereinigt, im Umlufttrockenschrank bei 60 °C 2 Tage getrocknet und 2 Wochen im Labor bei Raumtemperatur gelagert. Anschließend wird eine Platte mit VPS 8815 (unverdünnte Lösung) besprüht (Gloria Feinsprüher 1 Liter, Betriebsüberdruck 3 bar, Düseneinstellung Feinsprühstrahl). Der Imprägniermittelverbrauch beträgt ca. 200 g/m². Anschließend wird die behandelte Sandsteinplatte 2 Wochen im Labor bei Raumtemperatur gelagert. Die Antigraffitieigenschaften entsprechen denjenigen aus Vergleichsbeispiel A.

### Beispiel 3

### Mehrfachimprägnierung von rotem Mainsandstein, Beurteilung des Antigraffitieffekts

Roter Mainsandstein wird in Platten der Dimensionierung 30 x 30 x 2 cm zugeschnitten, mit Wasser gereinigt, im Umlufttrockenschrank bei 60 °C 2 Tage getrocknet und 2 Wochen im Labor bei Raumtemperatur gelagert. Anschließend wird eine Platte mit VPS 8815 (verdünnte Lösung 1 Teil VPS 8815 Konzentrat + 14 Teile Wasser) besprüht (Gloria Feinsprüher 1 Liter, Betriebsüberdruck 3 bar, Düseneinstellung Feinsprühstrahl). Der Imprägniermittelverbrauch beträgt ca. 200 g/m². Nach Trocknung der Sandsteinplatte (ca. 2 Stunden, Raumtemperatur) erfolgt der Auftrag der zweiten Schicht. Hierzu wird mit einer handelsüblichen Sprühapparatur (Gloria Feinsprüher 1 Liter, Betriebsüberdruck 3 bar, Düseneinstellung Feinsprühstrahl) ein feiner Sprühnebel von VPS 8815 (unverdünnt eingesetzt) auf der hydrophoben Steinoberfläche abgeschieden. Die Tröpfchengröße wird so gering eingestellt, dass die abgeschiedenen Tröpfchen nicht abrollen (auch dann nicht, wenn der Stein senkrecht aufgestellt wird). Anschließend werden die feinen Tröpfchen mit einer weichen Bürste auf der Oberfläche des Steins zu einem homogenen Film verrieben. Die vom Stein bei diesem Prozess aufgenommene Imprägniermittelmenge beträgt nur ca. 40 g/m². Dieser Vorgang wird wiederholt. Bei der Aufbringung der dritten Schicht beträgt der Imprägniermittelverbrauch allerdings nur noch ca. 20 g/m². Nach 2 Wochen Lagerung des Steins bei Raumtemperatur werden die Antigraffitieigenschaften bestimmt. Diese entsprechen denjenigen aus Beispiel 1. Es ergeben sich bei reduzierter Gesamtverbrauchsmenge gegenüber der einmaligen Imprägnierung verbesserte Antigraffitieigenschaften.

## Patentansprüche

1. Verfahren zur Erzeugung einer Farbe, Lack, Schadstoffe, Bioorganismen, Öl, Wasser und/oder Schmutz abweisenden Schicht auf einem anorganischen Substrat,
**dadurch gekennzeichnet,**
**dass** man
in einem ersten Schritt
(i) ein Organosiloxan, das mindestens eine Triaminogruppe der allgemeinen Formel I
[NHₓ(CH₂)ₐNH_{y}(CH₂)_{b}NH_{z}]- (I),
wobei eine solche über mindestens eine N-gebundene Alkylengruppe mit 1 bis 4 C-Atomen an mindestens ein Siliciumatom gebunden ist, a und b gleich oder verschieden sind und eine ganze Zahl von 1 bis 6 darstellen, x gleich 0 oder 1 oder 2 ist, y gleich 0 oder 1 ist, z gleich 0 oder 1 oder 2 ist und der Maßgabe (x+y+z) ≤ 4,
mindestens eine Si-C-gebundene Fluoralkylgruppe der allgemeinen Formel II
F₃C(CF₂)ᵣ(CH₂)ₛ- (II),
worin r eine ganze Zahl von 0 bis 18 darstellt und s gleich 0 oder 2 ist,
und mindestens eine Hydroxy- und/oder Alkoxygruppe trägt,
oder
(ii) eine Zubereitung, die ein Organosiloxan oder ein Gemisch von Organosiloxanen gemäß (i) enthält,
oder
(iii) ein Alkylalkoxysilan, wobei Alkyl für eine lineare, verzweigte oder cyclische Alkylreste mit 1 bis 16 C-Atomen und Alkoxy für Methoxy oder Ethoxy oder Propoxy oder Butoxy stehen,
oder
(iv) eine Zubereitung, die mindestens eine Organosiloxan enthält, das mindestens eine Aminogruppe der allgemeinen Formel III
[NH₂(CH₂)ₐ(NH)ᵣ(CH₂)_{b}(NH)ₛ]- (III),
wobei diese über mindestens eine N-gebundene Alkylengruppe mit 1 bis 4 C-Atomen an mindestens ein Siliciumatom gebunden ist, a und b gleich oder verschieden sind und eine ganze Zahl von 0 bis 6 darstellen, r gleich 0 oder 1 ist, s gleich 0 oder 1 ist und der Maßgabe, wenn a = 0 ist r = 0 und wenn b = 0 ist s = 0,
mindestens eine Si-C-gebundene lineare, verzweigte oder cyclische Alkylgruppe mit 1 bis 16 C-Atomen
und mindestens eine Hydroxy- und/oder Alkoxygruppe trägt,
auf dem Substrat appliziert,
danach in einem zweiten Schritt eine weitere Schicht unter Einsatz eines Organosiloxans gemäß (i) oder einer Organosiloxan enthaltenden Zusammensetzung gemäß (ii) auf das behandelte Substrat aufbringt
und den zweiten Schritt gegebenenfalls noch einmal oder weitere Male wiederholt.

2. Verfahren nach Anspruch 1,
**dadurch gekennzeichnet,**
**dass** man die Komponenten (i) bis (iv) in einem Imprägniermittel mit einer Wirkstoffkonzentration von 0,01 bis 100 Gew.-% verwendet.

3. Verfahren nach Anspruch 1 oder 2,
**dadurch gekennzeichnet,**
**dass** man die Komponenten (i) bis (iv) in einer wäßrigen und/oder alkoholischen Zubereitung oder in einer Emulsion verwendet.

4. Verfahren nach einem der Ansprüche 1 bis 3,
**dadurch gekennzeichnet,**
**dass** man im ersten Schritt die Komponenten (i) bis (iv) in verdünnter Form einsetzt.

5. Verfahren nach einem der Ansprüche 1 bis 4,
**dadurch gekennzeichnet,**
**dass** man in einem zweiten oder weiteren Schritt die Komponenten (i) oder (ii) oder ein entsprechendes Mittel mit einer Wirkstoffkonzentration von 1 bis 50 Gew.-% einsetzt.

6. Verfahren nach einem der Ansprüche 1 bis 5,
**dadurch gekennzeichnet**,
das man als Komponente (iii) Methyltrimethoxysilan, Dimethyldimethoxysilan, Methyltriethoxysilan, Dimethyldiethoxysilan, i-Propyltrimethoxysilan, i-Propyltriethoxysilan, n-Propyltrimethoxysilan, n-Propyltriethoxysilan, i-Butyltrimethoxysilan, i-Butyltriethoxysilan, n-Butyltrimethoxysilan, n-Butyltriethoxysilan, i-Octyltrimethoxysilan, i-Octyltriethoxysilan, n-Octyltrimethoxysilan, n-Octyltriethoxysilan, Hexadecyltrimethoxysilan oder Hexadecyltriethoxysilan einsetzt.

7. Verfahren nach einem der Ansprüche 1 bis 6,
**dadurch gekennzeichnet,**
**dass** man gemäß (i) oder (ii) ein Organosiloxan und/oder ein Gemisch von Organosiloxanen verwendet, worin das molare Verhältnis der Gruppen gemäß den Formeln I und II 1 : ≤ 3,5 beträgt.

8. Verfahren nach einem der Ansprüche 1 bis 7,
**dadurch gekennzeichnet,**
**dass** man gemäß (i) oder (ii) ein Organosiloxan und/oder ein Gemisch von Organosiloxanen verwendet, welches durch Cokondensation von einem Aminoethylaminoethylaminopropyltrialkoxysilan und Tridecafluoroctyltrialkoxysilan erhalten wurde, wobei Alkoxy für Methoxy sowie für Ethoxy steht.

9. Verfahren nach einem der Ansprüche 1 bis 8,
**dadurch gekennzeichnet,**
**dass** man die Komponenten (i) bis (iv) gemäß Schritt eins, zwei oder weiteren Schritten durch Aufsprühen, Aufstreichen, Aufrollen, Tauchen, Rakeln, Polieren oder Fluten auf das Substrat aufbringt.

10. Verfahren nach einem der Ansprüche 1 bis 9,
**dadurch gekennzeichnet,**
**dass** es sich bei dem Substrat um einen porösen, mineralischen Baustoff handelt.

11. Verfahren nach einem der Ansprüche 1 bis 10,
**dadurch gekennzeichnet,**
**dass** es sich bei dem porösen, mineralischen Baustoff um Beton, Kalksandstein, Ziegel, mineralischen Putz oder Naturstein handelt.

12. Verfahren nach einem der Ansprüche 1 bis 11,
**dadurch gekennzeichnet,**
**dass** es sich bei dem Substrat um einen mit einem Farbsystem beschichteten porösen, mineralischen Baustoff handelt.

13. Beschichtung, erhältlich nach einem der Ansprüche 1 bis 12.

14. Verwendung einer Beschichtung nach Anspruch 13 zur Farbe, Lack, Schadstoffe, Bioorganismen, Öl, Wasser und/oder Schmutz abweisenden Ausstattung eines saugfähigen, anorganischen Substrats.

15. Beschichtetes Substrat nach einem der Ansprüche 1 bis 14.

## Claims

1. A process for producing an ink, paint, pollutant, bioorganism, oil, water and/or dirt repellent coat on an inorganic substrate, **characterized in that** in a first step
(i) an organosiloxane which carries at least one triamino group of the general formula I
[NHₓ(CH₂)ₐNH_{y}(CH₂)_{b}NH_{z}] - (I),
such a group being attached by way of at least one N-bonded alkylene group having 1 to 4 carbon atoms to at least one silicon atom, a and b being identical or different and representing an integer from 1 to 6, x being 0 or 1 or 2, y being 0 or 1, z being 0 or 1 or 2, subject to the proviso that (x+y+z) ≤ 4,
at least one Si-C-bonded fluoroalkyl group of the general formula II
F₃C(CF₂)ᵣ(CH₂)ₛ- (II)
in which r is an integer from 0 to 18 and s is 0 or 2,
and at least one hydroxyl and/or alkoxy group,
or
(ii) a formulation which comprises an organosiloxane or a mixture of organosiloxanes as per (i),
or
(iii) an alkylalkoxysilane in which alkyl represents a linear, branched or cyclic alkyl radical having 1 to 16 carbon atoms and alkoxy represents methoxy or ethoxy or propoxy or butoxy,
or
(iv) a formulation which comprises at least one organosiloxane which carries at least one amino group of the general formula III
[NH₂(CH₂)ₐ(NH)ᵣ(CH₂)_{b}(NH)ₛ]- (III),
this group being attached by way of at least one N-bonded alkylene group having 1 to 4 carbons atoms to at least one silicon atom, a and b being identical or different and being an integer from 0 to 6, r being 0 or 1, s being 0 or 1, subject to the proviso that if a = 0 then r = 0 and if b = 0 then s = 0,
at least one Si-C-bonded linear, branched or cyclic alkyl group having 1 to 16 carbon atoms,
and at least one hydroxyl and/or alkoxy group,
is applied to the substrate,
subsequently in a second step a further coat is applied to the treated substrate, using an organosiloxane as per (i) or an organosiloxane-containing composition as per (ii),
and, if desired, the second step is repeated one or more times.

2. A process according to claim 1, **characterized in that** the components (i) to (iv) are used in an impregnating composition having an active substance concentration of from 0.01 to 100% by weight.

3. A process according to either of claims 1 and 2, **characterized in that** the components (i) to (iv) are used in an aqueous and/or alcoholic formulation or in an emulsion.

4. A process according to any one of claims 1 to 3, **characterized in that** in the first step the components (i) to (iv) are used in diluted form.

5. A process according to any one of claims 1 to 4, **characterized in that** in a second or further step the components (i) or (ii) or a corresponding composition is used with an active substance concentration of from 1 to 50% by weight.

6. A process according to any one of claims 1 to 5, **characterized in that** methyltrimethoxysilane, dimethyldimethoxysilane, methyltriethoxysilane, dimethyldiethoxysilane, i-propyltrimethoxysilane, i-propyltriethoxysilane, n-propyltrimethoxysilane, n-propyltriethoxysilane, i-butyltrimethoxysilane, i-butyltriethoxysilane, n-butyltrimethoxysilane, n-lautyltriethoxysilane, i-octyltrimethoxysilane, i-octyltriethoxysilane, n-octyltrimethoxysilane, n-octyltriethoxysilane, hexadecyltrimethoxysilane or hexadecyltriethoxysilane is used as component (iii).

7. A process according to any one of claims 1 to 6, **characterized in that** in accordance with (i) or (ii) an organosiloxane and/or a mixture of organosiloxanes is used in which the molar ratio of the groups according to the formulae I and II is 1 : ≤ 3.5.

8. A process according to any one of claims 1 to 7, **characterized in that** in accordance with (i) or (ii) an organosiloxane and/or a mixture of organosiloxanes is used which has been obtained by cocondensation of an aminoethylaminoethylaminopropyltrialkoxysilane and tridecafluorooctyltrialkoxysilane, alkoxy representing methoxy or representing ethoxy.

9. A process according to any one of claims 1 to 8, **characterized in that** the components (i) to (iv) in accordance with step one, two or further steps are applied to the substrate by spraying, brushing, rolling, dipping, knife coating, polishing, or flow coating.

10. A process according to any one of claims 1 to 9, **characterized in that** the substrate comprises a porous mineral building material.

11. A process according to any one of claims 1 to 10, **characterized in that** the porous mineral building material comprises concrete, lime sandstone, brick, mineral plaster, or natural stone.

12. A process according to any one of claims 1 to 11, **characterized in that** the substrate comprises a porous mineral building material coated with a paint system.

13. A coating obtainable as according to any one of claims 1 to 12.

14. The use of a coating as according toclaim 13 for the ink, paint, pollutant, bioorganism, oil, water and/or dirt repellency treatment of an absorbent inorganic substrate.

15. A substrate coated as according to any one of claims 1 to 14.

## Revendications

1. Procédé de production d'une couche repoussant la peinture, le vernis, les polluants, les bio-organismes, l'huile, l'eau et/ou la saleté, sur un substrat inorganique,
**caractérisé en ce que**
dans une première étape, on applique, sur le substrat,
(i) un organosiloxane qui contient
- au moins un groupe triamino de formule générale I
[NHₓ(CH₂)ₐNH_{y}(CH₂)_{b}NH_{z}]- (I),
un tel groupe étant lié à au moins un atome de silicium par l'intermédiaire d'au moins un groupe alkylène, N-lié, portant 1 à 4 atomes de C, a et b étant identiques ou différents et représentant un nombre entier de 1 à 6, x étant égal à 0 ou 1 ou 2, y étant égal à 0 ou 1, z étant égal à 0 ou 1 ou 2 et étant précisé que (x+y+z) ≤ 4,
- au moins un groupe fluoroalkyle, Si-C-lié, de formule générale II
F₃C(CF₂)ᵣ(CH₂)ₛ- (II),
dans laquelle r est un nombre entier de 0 à 18 et s est égal à 0 ou à 2, et
- au moins un groupe hydroxy et/ ou alcoxy,
ou
(ii) une préparation qui renferme un organosiloxane ou un mélange d'organosiloxanes selon (i),
ou
(iii) un alkylalcoxysilane, alkyle représentant un radical alkyle linéaire, ramifié ou cyclique, portant 1 à 16 atomes de C et alcoxy un groupe méthoxy ou éthoxy ou propoxy ou butoxy,
ou
(iv) une préparation qui contient au moins un organosiloxane qui porte
- au moins un groupe amino de formule générale III
[NH₂(CH₂)ₐ(NH)ᵣ(CH₂)_{b}(NH)ₛ]- (III),
celui-ci étant lié à au moins un atome de silicium par l'intermédiaire d'au moins un groupe alkylène, N-lié, portant 1 à 4 atomes de C, a et b étant identiques ou différents et représentant un nombre entier de 0 à 6, r étant égal à 0 ou 1, s étant égal à 0 ou 1 et étant précisé que si a = 0 alors r = 0, et si b = 0 alors s = 0,
- au moins un groupe alkyle linéaire, ramifié ou cyclique Si-C-lié portant 1 à 16 atomes de C, et
- au moins un groupe hydroxy et/ou alcoxy,
ensuite dans une deuxième étape, on applique sur le substrat traité, une autre couche en utilisant un organosiloxane selon (i) ou une composition selon (ii) contenant un organosiloxane, et
le cas échéant on répète encore une fois ou plusieurs fois la deuxième étape.

2. Procédé selon la revendication 1,
**caractérisé en ce qu'**
on utilise les composants (i) à (iv) dans un agent d'imprégnation ayant une concentration de l'agent actif de 0,01 à 100 % en poids.

3. Procédé selon la revendication 1 ou 2,
**caractérisé en ce qu'**
on utilise les composants (i) à (iv) dans une préparation aqueuse et/ou alcoolique ou dans une émulsion.

4. Procédé selon l'une quelconque des revendications 1 à 3,
**caractérisé en ce que**
dans la première étape, on met en oeuvre les composants (i) à (iv) sous forme diluée.

5. Procédé selon l'une quelconque des revendications 1 à 4,
**caractérisé en ce que**
dans la deuxième ou une autre étape, on met en oeuvre les composants (i) ou (ii) ou un agent correspondant, dans une concentration de l'agent actif de 1 à 50 % en poids.

6. Procédé selon l'une quelconque des revendications 1 à 5,
**caractérisé en ce que**
comme composant (iii) on utilise du méthyltriméthoxysilane, du diméthyldiméthoxysilane, du méthyltriéthoxysilane, du diméthyldiéthoxysilane, du i-propyltriméthoxysilane, du i-propyltriéthoxysilane, du n-propyltriméthoxysilane, du n-propyltriéthoxysilane, du i-butyltriméthoxysilane, du i-butyltriéthoxysilane, du n-butyltriméthoxysilane, du n-butyltriéthoxysilane, du i-octyltriméthoxysilane, du i-octyltriéthoxysilane, du n-octyltriméthoxysilane, du n-octyltriéthoxysilane, de l'hexadécyltriméthoxysilane ou de l'hexadécyltriéthoxysilane.

7. Procédé selon l'une quelconque des revendications 1 à 6,
**caractérisé en ce qu'**
on utilise selon (i) ou (ii) un organosiloxane et/ou un mélange d'organosiloxanes, dans lequel le rapport molaire des groupes selon les formules I et II est de 1:≤3,5.

8. Procédé selon l'une quelconque des revendications 1 à 7,
**caractérisé en ce qu'**
on utilise selon (i) ou (ii) un organosiloxane et/ou un mélange d'organosiloxanes qui a été obtenu par co-condensation d'un aminoéthylaminoéthylaminopropyltrialcoxysilane et d'un tridécafluoroctyltrialcoxysilane, alcoxy représentant un groupe méthoxy ainsi qu'un groupe éthoxy.

9. Procédé selon l'une quelconque des revendications 1 à 8,
**caractérisé en ce qu'**
on applique sur le substrat les composants (i) à (iv) selon l'étape une, deux ou d'autres étapes, par aspersion, enduction à la brosse, au rouleau, immersion, raclage, polissage ou à la vague.

10. Procédé selon l'une quelconque des revendications 1 à 9,
**caractérisé en ce que**
le substrat est un matériau de construction minéral poreux.

11. Procédé selon l'une quelconque des revendications 1 à 10,
**caractérisé en ce que**
le matériau de construction minéral poreux est du béton, du grès, de la brique, du crépi minéral ou de la pierre naturelle.

12. Procédé selon l'une quelconque des revendications 1 à 11,
**caractérisé en ce que**
le substrat est un matériau de construction minéral poreux recouvert d'un système de peinture.

13. Revêtement pouvant être obtenu selon l'une quelconque des revendications 1 à 12.

14. Utilisation d'un revêtement selon la revendication 13, pour qu'un substrat inorganique absorbant soit rendu repoussant la peinture, le vernis, les polluants, les bio-organismes, l'huile, l'eau et/ou la saleté.

15. Substrat enduit selon l'une quelconque des revendications 1 à 14.
